Europäisches Patentamt

European Patent Office

Office européen des brevets

(19)

(11) Veröffentlichungsnummer: **0 049 763**
**B1**

(12) # EUROPÄISCHE PATENTSCHRIFT

(45) Veröffentlichungstag der Patentschrift:
18.04.84

(21) Anmeldenummer: 81107108.3

(22) Anmeldetag: 10.09.81

(51) Int. Cl.³: **C 01 B 25/40**

(54) Verfahren zur Herstellung von langkettigem Ammoniumpolyphosphat.

(30) Priorität: 15.10.80 DE 3038836

(43) Veröffentlichungstag der Anmeldung:
21.04.82 Patentblatt 82/16

(45) Bekanntmachung des Hinweises auf die Patenterteilung:
18.04.84 Patentblatt 84/16

(84) Benannte Vertragsstaaten:
AT BE CH DE FR GB IT LI NL SE

(56) Entgegenhaltungen:
DE - C - 1 442 994
DE - C - 1 442 995
DE - C - 2 330 174
US - A - 3 419 349
US - A - 4 017 589
US - A - 4 043 987

JOURNAL OF THE AMERICAN CHEMICAL SOCIETY,
Band 91, 1. Januar 1969 C.Y. SHEN et al. "Preparation
and Characterization of Crystalline Long-Chain
Ammonium Polyphosphates" Seiten 62 bis 67

(73) Patentinhaber: **HOECHST AKTIENGESELLSCHAFT,**
**Postfach 80 03 20, D-6230 Frankfurt am Main 80 (DE)**

(72) Erfinder: **Maurer, Alexander, Dr., Am grünen Weg 7,**
**D-5030 Hürth (DE)**
Erfinder: **Stenzel, Jürgen, Dr., Auf Rodder 14,**
**D-5353 Mechernich-Kommern (DE)**
Erfinder: **Heymer, Gero, Dr., Fasanenaue 12,**
**D-5042 Erftstadt (DE)**

Verfahren zur Herstellung von langkettigem Ammoniumpolyphosphat

Die vorliegende Erfindung betrifft ein Verfahren zur Herstellung von im wesentlichen aus der kristallinen Modifikation II bestehendem langkettigen Ammoniumpolyphosphat.

Ammoniumpolyphosphat, im folgenden kurz APP genannt, wird seit einiger Zeit grosstechnisch hergestellt und zum Zwecke des Flammschutzes z.B. in Kunststoffen und Anstrichsystemen mit Erfolg eingesetzt. Dennoch weisen die handelsüblichen Produkte noch Mängel auf, von denen einer, nämlich die Viskositätsbeeinflussung des umgebenden Mediums, besonders für den Verarbeiter grössere Bedeutung hat. Handelsübliches APP führt sowohl im wässrigen als auch organischen Milieu zu einem starken Anstieg der Viskosität, was einerseis die Einsatzmenge begrenzt und andererseits die Aggregate bei der Weiterverarbeitung stark beansprucht. In manchen Fällen erstarrt die Masse sogar zu einem steifen Brei, der nicht mehr pumpfähig und damit nicht mehr verarbeitbar ist. Zum Zwekke des Flammschutzes ist jedoch der Einsatz einer bestimmten Menge APP im System notwendig; eine Reduzierung dieser Menge würde die Flammschutzeigenschaften spürbar verschlechtern. Es war daher wünschenswert, ein APP mit nur geringer Viskositätsbeeinflussung des umgebenden Mediums zu erhalten, um die Einarbeitung der für den Flammschutz notwendigen Menge APP in die Flammschutzsysteme zu gewährleisten.

Aus der DE-C-14 42 994 ist die Herstellung von kettenförmig kondensierten Ammoniumpolyphosphaten aus sauren Ammoniumorthophosphaten mit Hilfe von Melamin bekannt. Dabei wird ein Ausgangsgemisch, das Stickstoff und Phosphor in einem Molverhältnis grösser als 1:1 enthält, auf Temperaturen oberhalb 110 bis 450°C erhitzt. Die so erhaltenen Produkte weisen einen deutlich glasigen Charakter auf und enthalten wesentliche Anteile an Gemischen von Oligomeren, die für die Viskositätssteigerungen der wässrigen oder organischen Suspensionen dieser Stoffe verantwortlich sind.

Gleiches gilt für das gemäss der DE-C-14 42 995 erhaltene Umsetzungsprodukt von Melamin mit Ammoniumphosphaten und Phosphorsäure bei Temperaturen zwischen 180 und 350°C. Hinzu kommt, dass beim Einsatz von Phosphorsäure eine verhältnismässig grosse Menge Wasser aus dem System entfernt werden muss.

Auch gemäss der US-A-4 043 987 dienen als Ausgangsprodukt kondensierte Phosphorsäuren, welche dann mit Melamin bei Temperaturen oberhalb 150°C zu einem festen Schaum umgesetzt werden, der anschliessend gemahlen werden muss. Ausser, dass auch in diesem Falle aus dem Reaktionsgemisch grössere Mengen Wasser entfernt werden müssen, sind zum Mahlen der festen Schäume zusätzlich aufwendige Arbeitsgänge erforderlich.

Es ist auch schon versucht worden [Shen, Stahlheber, Dyroff, J. Amer. Chem. Soc. 91, 62 (1969)] kristallines APP der Modifikation II herzustellen. Dies gelang bisher nur über die Zwischenstufe der Modifikation I durch langes Erhitzen äquimolarer Mengen von $NH_4H_2PO_4$ und Harnstoff in Gegenwart von $NH_3$ bei der hohen Temperatur von 280°C und anschliessendem sehr langen Tempern bei Temperaturen von 200–375°C.

Überraschenderweise wurde nun gefunden, dass man langkettiges, kristallines Ammoniumpolyphosphat, welches im wesentlichen aus der Modifikation II besteht, in einfacher Weise bei wesentlich niedrigeren Temperaturen und kürzeren Reaktionszeiten erhält, wenn man ein Gemisch von Phosphorpentoxid und Ammoniumorthophosphat im Molverhältnis 1:0,9 bis 1:1,1, vorzugsweise von 1:1 – mit 0,1 bis 15 Mol% Melamin, bezogen auf das eingebrachte Phosphorpentoxid bei einer Temperatur zwischen 50 und 150°C – vorzugsweise zwischen 50 und 100°C – in Gegenwart von überschüssigem Ammoniak reagieren lässt. Anstelle von Melamin können auch dessen Kondensationsprodukte Melam, Melem oder Melon – berechnet als Melamin – eingesetzt werden. Das nach etwa 0,5 bis 2 Stunden erhaltene Reaktionsprodukt tempert man anschliessend noch 1 bis 6 Stunden lang bei Temperaturen zwischen 200 und 400°C, ebenfalls noch in Ammoniakatmosphäre. Dies kann sowohl in dem Reaktor, in welchem die Umsetzung durchgeführt wurde, als auch in einem getrennten Aggregat geschehen.

Vorteilhafterweise setzt man als Ausgangsprodukt ein Gemisch von $P_2O_5$ und Ammoniumorthophosphat sowie Melamin oder dessen Kondensationsprodukte ein, in welchem das Molverhältnis von Stickstoff zu Phosphor aller Reaktionskomponenten zwischen 0,3:1 und 1:1 beträgt. Es empfiehlt sich, die Ausgangsprodukte vorgemischt oder unmittelbar nacheinander in einen vorgeheizten Reaktor zu geben und dort die Reaktion mit einem Überschuss von Ammoniak ablaufen zu lassen. Eine besondere gute Ausnutzung der Ausgangsprodukte wird erzielt, wenn man die Umsetzung des eingesetzten Gemisches unter ständiger Bewegung und Erneuerung der Oberfläche des Reaktionsgutes durchführt, was durch Ausstattung des Reaktors mit geeigneten Rührund Knetwerkzeugen erreicht werden kann.

Durch die erfindungsgemässen Massnahmen, Zusatz des Melamins bzw. seiner Kondensationsprodukte und Reaktionsführung unter milden Temperaturbedingungen wird ein APP erhalten, das überraschenderweise eine geringe Viskositätsbeeinflussung des Suspensionsmediums und gleichzeitig einen pH-Wert über 5,5 aufweist. Die neue Arbeitsweise ist vorteilhaft gegenüber der bisherigen Verwendung von C-N-Verbindungen, wie z.B. Harnstoff und Dicyandiamid, welche unter den Reaktionsbedingungen nicht genügend stabil sind und sich sofort beim Eintrag in den vorgeheizten Reaktor zersetzen. Hierdurch gehen grosse Teile derartiger Zusätze ungenutzt verloren, ja, sie behindern durch ihren schlagartigen Zerfall in gasförmige Zersetzungsprodukte den Übertritt des gasförmigen Ammoniaks ins Reaktionsgut, was ein APP mit niederem pH-Wert und ungleichmässiger Qualität zur Folge hat. Alle diese Nachteile zeigen das Melamin und seine Kondensationsprodukte unter den gegebenen Reaktionsbedingungen nicht; sie führen vielmehr in kontrollierter Reaktion zu einem APP mit den gewünschten Eigenschaften.

Das erfindungsgemäss hergestellte APP zeigt sowohl in wässriger Suspension als auch in einem organischen System – als Beispiel sei ein Polyolsystem genannt – eine deutlich verringerte Viskositätsbeeinflussung. Während z.B. APP, hergestellt gemäss DE-C-23 30 174, durch Umsetzung von Ammoniumphosphat und $P_2O_5$ in Gegenwart von $NH_3$, in einer 10%igen wässrigen Suspension Viskositätswerte über 1000 mPa.s zeigt, ergibt sich bei den erfindungsgemässen Produkten ein Wert unterhalb von 10 mPa.s., vorzugsweise unterhalb von 50 mPa.s. Ähnliches Verhalten wird auch in organischen Lösungsmitteln, wie z.B. einem Polyolsystem beobachtet. Hier wird die Viskosität auf etwa die Hälfte gegenüber einem APP gemäss DE-C-23 30 174 reduziert. Dabei muss keine Erniedrigung des pH-Wertes, wie etwa bei Produkten, die unter Zusatz von Harnstoff und Derivaten hergestellt sind, in Kauf genommen werden. Ein weiterer Vorteil des erfindungsgemäss hergestellten APP ist seine gegenüber einem Produkt gemäss DE-C-23 30 174 deutlich weiter verringerte Löslichkeit. Diese wirkt sich günstig auf die Flammschutzeigenschaften des Produktes aus, da die Möglichkeit des Auswaschens aus dem System reduziert und damit die Haltbarkeit des Flammschutzsystems verbessert ist. Das erfindungsgemäss hergestellte APP zeigt deutlich kristalline Eigenschaften; es handelt sich überwiegend um die Modifikation II.

In einer speziellen Ausführungsform des erfindungsgemässen Verfahrens besteht auch die Möglichkeit, zusammen mit oder vor den Ausgangsstoffen dem Reaktor Rückgut aus vorangegangenen Ansätzen, etwa in Form von Überkorn und ähnlichem, zuzuführen. Hierdurch kommt es zu keiner Verschlechterung des Eigenschaftsbildes des resultierenden Ammoniumpolyphosphates.

Das erfidnungsgemässe Verfahren führt somit zu einem APP, das sich durch sein Eigenschaftsbild in hervorragender Weise als Flammschutzmittel für Intumeszensfarben, PUR-Schäume und Thermoplaste eignet.

Beispiel 1

In einem mit rotierenden Misch- und Knetwerkzeugen ausgestatteten und auf 100°C vorgeheizten Reaktor von 10 l Inhalt werden unmittelbar nacheinander 2.650 g $P_2O_5$, 2.470 g $(NH_4)_2HPO_4$ und 315 g Melamin eingetragen und während 1 Stunde bei dieser Temperatur miteinander zur Reaktion gebracht. Dabei werden 500 l Ammoniak dem Reaktor zugeführt. Danach wird die Temperatur auf 250°C erhöht und während 3 Stunden noch 400 l Ammoniak dem Reaktor zugeführt. Auch während dieser Temperung wird das Reaktionsgut ständig bewegt. Man erhält ein APP, das nahezu ausschliesslich der Modifikation II entspricht. Es hat einen pH-Wert von 6,2 in einer 1%igen wässrigen Suspension und ist bei 25°C in 10%iger wässriger Suspension zu 12% löslich. Die Viskosität einer 10%igen wässrigen Suspension ergibt sich zu 26 mPa.s, die einer 30%igen Suspension in einem Polyesterpolyol (Adipinsäurediäthylenglykolpolyester) zu 47 Pa.s. Wasserlöslichkeit und Viskosität wurden nach in solchen Fällen üblichen Methoden bestimmt.

Beispiel 2

Man verfährt wie in Beispiel 1. Jetzt werden aber nur 31,5 g Melamin zugegeben. Man erhält ein APP, das überwiegend der Modifikation II entspricht. Der pH-Wert beträgt 6,0, und die Löslichkeit liegt bei 10%. Die Viskosität der wässrigen Suspension wird mit 23 mPa.s gemessen, die der Suspension in einem Polyesterpolyol (siehe Beispiel 1) mit 50 Pa.s.

Beispiel 3

Man verfährt wie in Beispiel 1. Jetzt werden aber nur 3,15 g Melamin zugegeben. Man erhält ein APP, das überwiegend der Modifikation II entspricht. Sein pH-Wert beträgt 5,9, die Löslichkeit 12%. Die Viskosität der wässrigen Suspension liegt bei 32 m Pa.s, die der Suspension in einem Polyesterpolyol (siehe Beispiel 1) bei 46 Pa.s.

Beispiel 4 (Vergleichsbeispiel)

Man verfährt wie in Beispiel 1. Jetzt wird aber kein Melamin zugesetzt. Man erhält ein APP, das vorwiegend der Modifikation II entspricht, daneben aber noch deutliche Mengen Modifikation V enthält. Sein pH-Wert liegt bei 5,4; die Löslichkeit beträgt 15%. Es zeigt in wässriger Suspension eine Viskosität von 28 mPa.s, in einem Polyesterpolyol (siehe Beispiel 1) aber eine solche von 73 Pa.s.

Beispiel 5 (Vergleichsbeispiel)

Man verfährt gemäss DE-PS 23 30 174, Beispiel 1. Man erhält dann ein APP, das vorwiegend der Modifikation V entspricht und deutliche Anteile der Modifikation II enthält. Sein pH-Wert beträgt 5,5; die Löslichkeit liegt bei 30%. Die Viskosität der wässrigen Suspension beträgt 2.360 mPa.s, die der Suspension in einem Polyesterpolyol (siehe Beispiel 1) 90 Pa.s.

Beispiel 6 (Vergleichsbeispiel)

Man verfährt wie in Beispiel 1. Jetzt setzt man als C-N-Verbindung aber 75 g Harnstoff zu. Man erhält ein APP, das vorwiegend der Modifikation II entspricht. Es hat einen pH-Wert von 4,8 und eine Löslichkeit von 19%. Die Viskosität der wässrigen Suspension beträgt 33 mPa.s, die der Suspension in einem Polyesterpolyol (siehe Beispiel 1) aber 82 Pa.s.

Beispiel 7

Man verfährt wie in Beispiel 2. Jetzt wird die Reaktionstemperatur auf 50°C eingestellt. Man erhält ein APP, das überwiegend der Modifikation II entspricht. Seine Löslichkeit beträgt 10%, und der pH-Wert liegt bei 5,9. Die Viskosität der wässrigen Suspension beträgt 41 mPa.s, die der Suspension in einem Polyesterpolyol (siehe Beispiel 1) 40 Pa.s.

Beispiel 8

Man verfährt wie in Beispiel 2. Jetzt werden dem Reaktor aber noch zusätzlich zu den Ausgangsstoffen 850 g Rückgut aus einem vorangegangenen Ansatz zugeführt. Man erhält ein APP, das überwiegend der Modifikation II entspricht. Seine Löslichkeit beträgt 8%, der pH-Wert liegt bei 5,9. Die Viskosität der wässrigen Suspension beträgt 20 mPa.s, die der Suspension in einem Polyesterpolyol (siehe Beispiel 1) 44 Pa.s.

**Patentansprüche**

1. Verfahren zur Herstellung von im wesentlichen aus der kristallinen Modifikation II bestehenden langkettigen Ammoniumpolyphosphat durch Umsetzung von Derivaten der Orthophosphorsäure mit einer stickstoffhaltigen Verbindung in Gegenwart von Ammoniak bei erhöhten Temperaturen und Tempern des Reaktionsproduktes bei Temperaturen zwischen 200 und 400°C, dadurch gekennzeichnet, dass man ein Gemisch von Phosphorpentoxid und Ammoniumorthophosphat im Molverhältnis 1:0,9 bis 1:1,1 mit 0,1 bis 15 Mol% Melamin oder dessen Kondensationsprodukten Melam, Melem oder Mellon – berechnet als Melamin und bezogen auf das eingesetzte Phosphorpentoxid – bei einer Temperatur zwischen 50 und 150°C in Gegenwart von überschüssigem Ammoniak reagieren lässt.

2. Verfahren nach Anspruch 1, dadurch gekennzeichnet, dass man ein Gemisch von Phosphorpentoxid und Ammoniumorthophosphat im Molverhältnis von 1:1 einsetzt.

3. Verfahren nach Anspruch 1 oder 2, dadurch gekennzeichnet, dass man das eingesetzte Gemisch bei einer Temperatur zwischen 50 und 100°C reagieren lässt.

4. Verfahren nach einem der Ansprüche 1 bis 3, dadurch gekennzeichnet, dass man ein Gemisch von Phosphorpentoxid und Ammoniumorthophosphat sowie Melamin oder dessen Kondensationsprodukte einsetzt, in welchem das Molverhältnis von Stickstoff zu Phosphor aller Reaktionskomponenten zwischen 0,3:1 und 1:1 liegt.

5. Verfahren nach einem der Ansprüche 1 bis 4, dadurch gekennzeichnet, dass man die Ausgangsprodukte vorgemischt oder unmittelbar nacheinander in einen vorgeheizten Reaktor gibt und dort die Reaktion mit einem Überschuss an Ammoniak ablaufen lässt.

6. Verfahren nach einem der Ansprüche 1 bis 5, dadurch gekennzeichnet, dass man die Umsetzung des Gemisches unter ständiger Bewegung und Erneuerung der Oberfläche des Reaktionsgutes durchführt.

**Claims**

1. Process for making long chain ammonium polyphosphate consisting essentially of crystalline modification II by reacting orthophosphoric acid derivatives with a nitrogen-containing compound in the presence of ammonia at elevated temperatures and annealing the reaction product at temperatures between 200 and 400°C, which comprises: reacting a mixture of phosphorus pentoxide and ammonium orthophosphate in a molar ratio of 1:0.9 to 1:1.1 with 0.1 to 15 mol% of melamine or its condensation products melam, melem and mellon, calculated as melamine and based on the phosphorus pentoxide used, the reaction being effected at a temperature between 50° and 150°C in the presence of an excess of ammonia.

2. Process as claimed in claim 1, wherein a mixture of phosphorus pentoxide and ammonium orthophosphate in a molar ratio of 1:1 is used.

3. Process as claimed in claim 1 or 2, wherein the mixture used is allowed to undergo reaction at a temperature between 50° and 100°C.

4. Process as claimed in any of claims 1 to 3, wherein a mixture of phosphorus pentoxide and ammonium orthophosphate and melamine or its condensation products, in which the molar ratio of nitrogen to phosphorus in all reactants is between 0.3:1 to 1:1 is used.

5. Process as claimed in any of claims 1 to 4, wherein the feed materials are premixed or the feed materials are introduced successively into a preheated reactor and the reaction is effected with the use of an excess of ammonia.

6. Process as claimed in any of claims 1 to 5, wherein the mixture is reacted with continuous agitation, the surface area of the mixture to undergo reaction being continuously renewed thereby.

**Revendications**

1. Procédé de préparation de polyphosphate d'ammonium à longue chaîne, consistant essentiellement en la variété II, par réaction de dérivés de l'acide orthophosphorique avec un composé contenant de l'azote en présence d'ammoniac à des températures élevées, puis recuit du produit de réaction à des températures comprises entre 200 et 400°C, caractérisé en ce que l'on fait réagir un mélange anhydride phosphorique/orthophosphate d'ammonium dans un rapport molaire de 1:0,9 à 1:1,1 avec 0,1 à 15 mol% de mélamine ou de ses produits de condensation Mélam, Mélem ou Mélon – calculés en mélamine et par rapport à l'anhydride phosphorique utilisé – à une température comprise entre 50 et 150°C en présence d'un excès d'ammoniac.

2. Procédé selon la revendication 1, caractérisé en ce que l'on utilise un mélange d'anhydride phosphorique et d'orthophosphate d'ammonium dans le rapport molaire 1:1.

3. Procédé selon la revendication 1 ou 2, caractérisé en ce que l'on fait réagir le mélange utilisé à une température comprise entre 50 et 100°C.

4. Procédé selon l'une des revendications 1 à 3, caractérisé en ce que l'on utilise un mélange d'anhydride phosphorique et d'orthophosphate d'ammonium ainsi que de mélamine ou de ses produits de condensation, dans lequel le rapport molaire de l'azote au phosphore de tous les composants de réaction est compris entre 0,3:1 et 1:1.

5. Procédé selon l'une des revendications 1 à 4, caractérisé en ce que l'on introduit les produits de départ sous forme d'un mélange ou on les introduit successivement dans un réacteur préchauffé, dans lequel on effectue la réaction avec un excès d'ammoniac.

6. Procédé selon l'une des revendications 1 à 5, caractérisé en ce que l'on effectue la réaction du mélange en agitant et renouvelant continuellement la surface de la masse de réaction.